# EUROPEAN PATENT APPLICATION

(11) **EP 1 439 023 A1**
(43) Date of publication of application: **21.07.2004**
(21) Application number: 02736099.9
(22) Date of filing: 14.06.2002
(51) Int. Cl.: B23K 20/233, C22C 38/58

(54) **STAINLESS STEEL−COPPER CLAD AND METHOD FOR PRODUCTION THEREOF**

(30) Priority: 26.09.2001 JP 2001293346
(71) Applicant: NIPPON METAL INDUSTRY CO.,LTD., Tokyo 163-0470 (JP)
(72) Inventor: IMAI, Daisuke NIPPON METAL INDUSTRY CO., LTD., Sagamihara-shi, Kanagawa 229-1184 (JP); SASAKI, Masahiro NIPPON METAL INDUSTRY CO., LTD., Sagamihara-shi, Kanagawa 229-1184 (JP); SHIRAE, Katunori NIPPON METAL INDUSTRY CO., LTD., Sagamihara-shi, Kanagawa 229-1184 (JP)
(74) Representative: Böhm, Brigitte, Dipl.-Chem. Dr.
(86) International application number: PCT/JP2002/005944
(87) International publication number: WO 2003/028939

(57) **Abstract**

A stainless steel/Cu clad which has high-temperature strength enough to be not easily deformed and be sufficiently practical and high thermal conductivity for a high temperature use, and a manufacturing method of such a clad. The stainless steel/Cu clad of the invention is formed by bonding a high Mn austenitic stainless steel containing 9-16 mass% Mn and Cu metallically.
Manufacturing of the stainless steel/Cu clad is carried out as follows. That is, a first sheet made of the high Mn austenitic stainless steel, a second sheet made of Cu, and a third sheet of a heat resisting steel which acts as a peeling material are wound in a coil shape in a state where they are laminated in such order and, subsequently, the obtained coil is vacuum-annealed, thereby bonding them and manufacturing the high Mn austenitic stainless steel/Cu clad having high-temperature strength and high-thermal conductivity.

## Description

### Technical Field

The invention relates to a technique regarding a stainless steel/Cu (copper) clad and, more particularly, to a stainless steel/Cu clad and its manufacturing method which are suitable for use in a cooling medium for casting such as casting belt, mold raw material besides an electronic parts material.

### Background Art

Since such a kind of stainless steel/Cu clad is generally a functional material having both of high strength and corrosion resistance which a stainless steel has and electrical conductivity and thermal conductivity which copper has, hitherto, it has mainly been used as an electronic parts material. The stainless steel/Cu clad which is used as an electronic parts material is characterized in that the stainless steel is an Fe-16Cr steel or an Fe-18Cr-8Ni steel and mainly has both of electrical conductivity and spring performance.

In recent years, since the stainless steel/Cu clad has the excellent various properties as mentioned above, it is expected more and more that the stainless steel/Cu clad can be also applied to a high-temperature member as another application. Particularly, it strongly demanded to realize a practicality of a clad raw material suitable for an.application in which a high-temperature strength and high thermal conductivity are necessary, for example, a cooling medium for casting such as a casting belt or the like, a soaking plate for heating, or the like.

However, the conventional stainless steel/Cu clad has a problem such that since the high-temperature strength is insufficient, if it is used as a member which needs the strength at a high temperature, it is easily deformed and the practicality is still not enough.

It is, therefore, an object of the invention to provide a stainless steel/Cu clad which has both of high-temperature strength enough to be not easily deformed and be sufficiently practical and high thermal conductivity for a high temperature use, and to provide its manufacturing method.

### Disclosure of Invention

The inventors et al. of the present invention vigorously made studies in order to solve the conventional problems mentioned above, so that they have paid attention to that an austenitic stainless steel is more excellent as compared with, for example, a ferrite stainless steel in terms of a strength at a high temperature and, particularly, an austenitic stainless steel containing high manganese, among stainless steels, has large hardenability by cold working, is nonmagnetic after the cold working, and has larger high-temperature strength, found out that if such a high Mn austenitic stainless steel is cladded with Cu, the high-temperature strength of the whole clad is increased by the high-temperature strength which the stainless steel has, and have realized the present invention.

In order to accomplish the above object, the invention is, therefore, constructed as follows. That is, a stainless steel/Cu clad of the invention is characterized in that a high Mn austenitic stainless steel containing 9-16 mass% Mn and Cu are bonded metallically.

Thus, the stainless steel/Cu clad according to the invention has a high-temperature strength enough to be not easily deformed and be sufficiently practical and high thermal conductivity for a high temperature use, and can be also applied to a high-temperature member which needs the high-temperature strength and high thermal conductivity. Particularly, the stainless steel/Cu clad can be used as a clad raw material suitable for a cooling medium for casting such as casting belt for casting of Al (aluminum), Cu (copper), or the like, mold raw material, or the like.

The stainless steel/Cu clad according to the invention is characterized in that the high Mn austenitic stainless steel is constructed by chemical compositions in which 0.25 mass% or less C (carbon), 16.00-18.00 mass% Cr (chromium), 1.00-2.00 mass% Ni (nickel), 14. 00-16. 00 mass% Mn (manganese), and 0.50 mass% or less N (nitrogen) are contained and a residual part substantially consists of Fe (iron). According to the invention, therefore, the stainless steel/Cu clad which is more excellent in terms of the high-temperature strength and the high thermal conductivity can be obtained, so that it can be used as a more optimum clad raw material for the high-temperature member such as a cooling medium for casting or the like.

Subsequently, according to the invention, the above object can be also accomplished by constructing as follows. That is, the invention provides a manufacturing method of a stainless steel/Cu clad in which a first sheet made of a high Mn austenitic stainless steel containing 9-16 mass% Mn and a second sheet made of Cu are bonded metallically, characterized by comprising: a first step of winding, like a coil, the first sheet, the second sheet, and a third sheet of a heat resisting steel which acts as a peeling material in a state where they are laminated in such order; and a second step of vacuum annealing the coil obtained in the first step.

Further, according to the invention, there is provided a manufacturing method of the stainless steel/Cu clad, characterized in that the high Mn austenitic stainless steel is constructed by chemical compositions in which 0.25 mass% or less C, 16.00-18.00 mass% Cr, 1.00-2.00 mass% Ni, 14.00-16.00 mass% Mn, and 0. 50 mass% or less N are contained and a residual part substantially consists of Fe.

According to the manufacturing method of the stainless steel/Cu clad of the invention, therefore, since the clad is formed like a coil by the diffusion bonding using a seaming force, the high Mn austenitic stainless steel/Cu clad can be directly, simply, and efficiently manufactured from the high Mn austenitic stainless steel sheet and the Cu sheet.

### Best Mode for Carrying Out the Invention

An embodiment of the invention will be described in more detail hereinbelow with reference to the drawings.

A stainless steel/Cu clad of the invention is obtained by bonding a high Mn austenitic stainless steel containing 9-16 mass% Mn and Cu metallically. The high Mn austenitic stainless steel here denotes a stainless steel in which Ni of the Cr-Ni austenitic stainless steel is relatively replaced with Mn and a content of N is increased.

The high Mn austenitic stainless steel, as shown in Table 1 in which its chemical compositions and mechanical properties are shown as an example, particularly contains high Mn whose amount is 9-16 %, is solid-solution strengthened by 0.25-0.5 % N, and has a full austenitic structure, so that it has strong cold work hardenability and non-magnetism. Moreover, as shown in Table 1, the high Mn austenitic stainless steel has mechanical properties such that even after a solution treatment, the strength is larger than that of the Cr-Ni austenitic stainless steel (according to SUS304 as a representative steel type of the Cr-Ni austenitic stainless steel, a tensile strength: 578 MPa, a proof stress: 294 MPa, elongation: 55%, hardness HV: about 170).

**[TABLE 1]**

| Example of chemical compositions and mechanical properties of high Mn austenitic stainless steel | | | | | |
|---|---|---|---|---|---|
| Sample | Chemical compositions | Tensile strength MPa | Proof stress MPa | Elongation % | Hardness HV |
| A | C:0.13,Si;0.39,Mn:12.15,P:0.040 S:0.030,Cr:15.22, N:0.25 | 941 | 432 | 53 | 243 |
| B | C:0.15,Si:0.41,Mn:14.11,P:0.060 S:0.030,Cr:15.34,N:0.22 | 902 | 451 | 53 | 232 |
| C | C:0.14,Si:0.36,Mn:15.H,P:C.060 S:0.030,Ni:1.28,Cr:17.15,N:0.36 | 862 | 598 | 51 | 284 |
| D | C:0.17,Si:0.40,Mn:15.26,P:0.045 S:0.04S,Ni:1.5,cr:17.16,M:0.36 | 862 | 510 | 52 | 240 |
| E | C:0.06,Si:0.90,Mn:14.50,P:0.045 S:0.015,Ni:4.30,Cr:17.00,N:0.32 | 804 | 431 | 58 | 210 |
| F | C:0.15.Si:0.90,Mn:9.50,P:0.030 S:0.030,Ni:5.50,Cr:21.18.N:0.29 | 853 | 500 | 43 | 245 |
| G. | C:0.16,Si:0.40,Mn:14.95,P:0.020 S:0.030,Ni:1.50,Cr:17.25,N:0.45 | 631 | 476 | 58 | 240 |
| Note) The mechanical properties are shown by measurement values obtained after the solid-solution heat treatment | | | | | |

As shown in Table 2, with respect to the proof stress MPa and tensile strength MPa at a high temperature, the high Mn austenitic stainless steel is also more excellent than the Cr-Ni austenitic stainless steel and is the optimum material for an application in which the high-temperature strength is required. Therefore, if the high Mn austenitic stainless steel and Cu are cladded and bonded metallically, the high-temperature strength of the whole clad is further increased by the high-temperature strength which the stainless steel has while the high thermal conductivity which Cu has is held.

**[TABLE 2]**

| Comparison of high-temperature proof stresses and high-temperature tensile strengths of high Mn austenitic stainless steel, SUS304, and SUH310 | | | | | | | | | |
|---|---|---|---|---|---|---|---|---|---|
| Sa mple | | RT | 200°C | 300°C | 400°C | 500°C | 600°C | 700°C | 800°C |
| C in Table 1 | Proof stress MPa | 598 | 380 | 290 | 260 | 260 | 230 | 210 | 170 |
| | Tensile strength MPa | 862 | 790 | 780 | 650 | 610 | 560 | 440 | 300 |
| SUS 304 | Proof stress MPa | 235 | 202 | 178 | 171 | 168 | 144 | 111 | 78 |
| | Tensile strength MPa | 662 | 469 | 471 | 456 | 418 | 372 | 240 | 132 |
| SUH 310 | Proof stress MPa | 261 | 188 | 189 | 178 | 166 | 162 | 137 | 110 |
| | Tensile strength MPa | 624 | 527 | 536 | 532 | 502 | 441 | 321 | 202 |

Further, since the thermal expansion coefficient of the high Mn austenitic stainless steel is equal to about 18 × 10⁻⁶ and a difference between this value and the thermal expansion coefficient of Cu (17 × 10⁻⁶) is small, peel-off or deformation of the clad is hardly caused in association with a strain due to a temperature change.

Although the example of chemical compositions of the high Mn austenitic stainless steel which is used in the invention has been shown in Table 1 in the foregoing embodiment, the invention is not limited to such an example of composition construction. However, in the invention, it is desirable to use the austenitic stainless steel containing at least 9-16 mass% Mn. The reason why the mass% of the Mn amount has been set to 9-16 % is to stabilize the austenitic structure.

Further, in the stainless steel/Cu clad of the invention, it is more desirable to use the high Mn austenitic stainless steel in which 0.25 mass% or less C, 16.00-18.00 mass% Cr, 1.00-2.00 mass% Ni, 14.00-16. 00 mass% Mn, and 0.50 mass% or less N are contained and a residual part substantially consists of Fe in order to stably obtain the high-temperature strength and the high thermal conductivity.

On the other hand, in the stainless steel/Cu clad of the invention, although the type of Cu is not limited, Cu such as oxygen free Cu is suitable in terms of the thermal conductivity and bonding performance. To further increase the strength, alloy Cu such as Cr-Cu is suitable.

Subsequently, a case of manufacturing the high Mn austenitic stainless steel/Cu clad according to the invention will be described.

Explanation will be made with respect to a method of manufacturing the stainless steel/Cu clad by bonding, for example: a first sheet made of a high Mn austenitic stainless steel in which 0.25 mass% or less C, 16.00-18.00 mass% Cr, 1.00-2.00 mass% Ni, 14.00-16.00 mass% Mn, and 0.50 mass% or less N are contained and a residual part substantially consists of Fe; and a second sheet made of Cu.

In the case of bonding the stainless steel and Cu, it is desirable to use what is called a diffusion bonding method. This is because (1) although the difference of the thermal expansion coefficients between Cu and stainless steel is small, since a stress due to the thermal expansion difference acts, if the bonding strength is weak, there is a risk of occurrence of the peel-off, so that the sufficient bonding strength is necessary and (2) if an inserting material is inserted between Cu and stainless steel, it becomes an obstacle of the thermal conduction and the sufficient thermal conduction cannot be obtained. Moreover, in the case of using the clad for a casting belt or the like, a sufficient length of the clad is necessary and, for this purpose, it is desirable to form the clad in a coil shape.

Therefore, the method of manufacturing the clad in a coil shape by using a seaming force is optimum. According to the invention, therefore, a first sheet made of the high Mn austenitic stainless steel with the above-mentioned chemical compositions, a second sheet made of Cu, and a third sheet of a heat resisting steel which acts as a peeling material are wound in a coil shape in a state where they are laminated in such order (first step) and, subsequently, the coil obtained in the first step is vacuum-annealed (second step), thereby manufacturing the stainless steel/Cu clad.

By using such a manufacturing method, the high Mn austenitic stainless steel/Cu clad can be directly, easily, and efficiently manufactured from the high Mn austenitic stainless steel sheet and the Cu sheet.

### [Embodiment]

Although the invention will be subsequently described further in detail on the basis of the embodiment shown hereinbelow, naturally, the invention is not limited to the embodiment.

The inventors et al. of the present invention have performed experiments to confirm effects of the high Mn austenitic stainless steel/Cu clad according to the invention. In the experiments, the stainless steel having the following chemical composition was used as a high Mn austenitic stainless steel and oxygen free Cu was used as Cu.

That is, the high Mn austenitic stainless steel which was used contains 0.25 mass% or less C, 16.00-18.00 mass%Cr, 1.00-2.00mass%Ni, 14.00-16.00mass%Mn, and 0. 50 mass% or less N and the residual part of it substantially consists of Fe. A stainless steel sheet having a thickness of 0.25 mm, a width of 330 mm, and a length of 240 m was used as a raw material. An oxygen free Cu sheet having a thickness of 2.25 mm, a width of 330 mm, and a length of 220 m was used as a raw material. Further, a heat resisting steel sheet of l8Cr-3.5A1-Fe having a thickness of 0.2 mm and having a thin oxide film formed on its surface was used as a peeling material.

Manufacturing of the stainless steel/Cu clad was carried out as follows. That is, a high Mn austenitic stainless steel sheet as a first sheet, an oxygen free Cu sheet as a second sheet, and a heat resisting steel sheet of 18Cr-3.5Al-Fe as a third sheet were laminated and wound around a core of a carbon steel and, further, fastened by the heat resisting steel sheet of 18Cr-3.5Al-Fe in a state where they were laminated (first step) . Subsequently, the coil obtained in the first step was inserted into a vacuum furnace and held at 980°C for 3 hours, so that diffusion bonding of the high Mn austenitic stainless steel and oxygen free Cu was performed, and it was cooled at last (second step).

Properties of the clad of the high Mn austenitic stainless steel and oxygen free Cu obtained by the above manufacturing method are as follows.

### (1) Bonding strength

The peel-off strength was examined by a shear peeling test, so that 951N (the area of a 5mm length and a 10mm width was stretched in the shearing direction) was obtained. In a heating/cooling test, the clad was heated to a predetermined temperature and, thereafter, cooled by the water. A surface condition of the clad after the test (peel-off, blister, etc.) was confirmed by the visual observation. The heating temperature was set to four levels 400°C, 500°C, 600°C, and 700°C. In result, abnormality such as peel-off or the like was not found on the surface at any heating temperatures.

As mentioned above, according to the present product, the high Mn austenitic stainless steel and Cu are bonded, so that the sufficient bonding strength is obtained even at a high temperature.

### (2) Mechanical properties

Mechanical properties of the present clad are as follows. A proof stress is equal to 129 MPa, a tensile strength is equal to 290 MPa, and an elongation is equal to 30% at room temperature. On the other hand, when the clad is held at a high temperature, a) the proof stress is equal to 45 MPa, the tensile strength is equal to 121 MPa, and the elongation is equal to 25.3% at 500°C and b) the .proof stress is equal to 28 MPa, the tensile strength is equal to 57 MPa, and the elongation is equal to 35.3% at 700°C. As mentioned above, it has been found that the present clad has a large high-temperature strength in comparison with pure Cu whose tensile strength at 500-700 °C is equal to 22-24 .MPa.

### (3) Thermal properties

As a thermal conductivity of the present clad, the coefficient of the thermal conductivity from the Cu side to the stainless steel side was measured by using model TC-7000 made by Vacuum Science and Technology (laser flashing method), so that it was equal to 170 . 5 W/mk at room temperature (about 30°C) and 219.7 W/mk at 600°C. It has been found that although the thermal conductivity of the present clad is smaller than 341 W/mk (538°C) of Cu, it is sufficiently larger than 38.9 W/mk (600°C) of Fe. The laser flashing method is a method of obtaining a thermal diffusion coefficient of a sample from a temperature response of the back surface when heating the sample surface in a pulse shape by a laser beam.

The high Mn austenitic stainless steel/Cu clad manufactured as mentioned above was used for a continuous casting belt of a Properzi method which is a continuous casting rolling method for a wire rod using for manufacturing of an Al (aluminum) coarse drawing wire. Hitherto, a carbon steel has been used for such a kind of casting belt. But, since a casting material was quenched by using the clad belt, its structure was made finer and the segregation which had occurred in the conventional carbon steel belt was eliminated.

### Industrial Applicability

As mentioned above, the invention is useful as a clad raw material which is suitable for use in a cooling medium for casting such as casting belt for casting of Al, Cu, or the like, mold raw material, besides an electronic parts material. The invention is suitable for manufacturing the stainless steel/Cu clad as such a clad raw material.

## Claims

1. A stainless steel/Cu clad wherein a high Mn austenitic stainless steel which contains 0.25 mass% or less C, 16. 00-18 . 00 mass% Cr, 1. 00-2. 00 mass% Ni, 14.00-16.00 mass% Mn, and 0.50 mass% or less N and in which a residual part substantially consists of Fe and Cu are bonded metallically and used for a cooling medium for casting.

2. A manufacturing method of the stainless steel/Cu clad wherein a first sheet made of a high Mn austenitic stainless steel which contains 0.25 mass% or less C, 16. 00-18 . 00 mass% Cr, 1.00-2.00 mass% Ni, 14.00-16.00 mass% Mn, and 0 . 50 mass% or less N and in which a residual part substantially consists of Fe, and a second sheet made of Cu are bonded metallically and used for a cooling medium for casting, comprising : a first step of binding, like a core, said first sheet, said second sheat, and a third sheet of a heat resisting steel which acts as a peeting material in a state where they are laminated in such order; and a second step of vacuum annealing the coil obtained in said first step.
